# FASCICULE DE BREVET EUROPEEN

(11) **EP 0 701 735 B1**
(45) Date de publication et mention de la délivrance du brevet: **03.03.1999**
(21) Numéro de dépôt: 95915230.7
(22) Date de dépôt: 30.03.1995
(51) Int. Cl.: H01B 1/12, C08K 5/42

(54) **COMPOSITIONS POLYMERIQUES ELECTRIQUEMENT CONDUCTRICES, PROCEDE DE FABRICATION ET SUBSTRATS REVETUS**
Elektrisch leitfähige Polymerzusammensetzungen, Herstellungsverfahren und beschichtete Substrate
ELECTRICALLY CONDUCTIVE POLYMER COMPOSITIONS, METHOD FOR MAKING SAME AND SUBSTRATES COATED THEREWITH

(30) Priorité: 31.03.1994 FR 9403812
(43) Date de publication de la demande: 20.03.1996
(73) Titulaire: FRANCE TELECOM, 75015 Paris (FR)
(72) Inventeur: CLARISSE, Christian, F-38320 Poisat (FR); DELABOUGLISE, Didier, F-38100 Grenoble (FR); CIPRELLI, Jean-Louis, F-38000 Grenoble (FR)
(74) Mandataire: Casalonga, Axel
(86) Numéro de dépôt international: FR9500406
(87) Numéro de publication internationale: WO9527289

(56) Documents cités:
- EP-A- 0 089 575
- EP-A- 0 097 893
- EP-A- 0 399 299
- US-A- 4 617 228

## Description

La présente invention concerne d'une manière générale de nouvelles compositions polymériques électriquement conductrices, un procédé de fabrication de ces nouvelles compositions, des substrats revêtus d'un film formé à partir de ces nouvelles compositions et des solutions oxydantes pour la fabrication de ces compositions.

Les polymères et copolymères électriquement conducteurs se sont avérés ces dernières années être des matériaux particulièrement intéressants, d'une part dans le domaine de la microélectronique, notamment dans les procédés photolithographiques, par exemple pour améliorer l'écoulement des charges électriques, et d'autre part en électrochimie, par exemple pour la réalisation de générateurs rechargeables.

Plus précisément, en microélectronique, de tels matériaux sont particulièrement utiles pour la réalisation de résines conductrices photosensibles pour le traitement par faisceau électronique ou l'ultraviolet lointain, la fabrication de masques à décalage de phase et de couches conductrices d'écoulement de charges pour l'examen au microscope électronique à balayage ou encore la gravure par plasma. En électrochimie, ces matériaux conviennent particulièrement pour le stockage d'énergie électrochimique, la fabrication de matériaux conducteurs antistatiques et les applications de l'électrochromisme.

Les polymères et copolymères intrinsèquement conducteurs sont des composés connus, et on peut citer parmi ces polymères et copolymères les poly(thiophènes), les polypyrroles, les polyacétylènes, les polyphénylènes, les copolymères des polythiophènes et des polypyrroles, et leurs dérivés hydrosolubles.

Ces polymères intrinsèquement conducteurs sont généralement dopés au moyen de composés oxydants forts.

Les composés généralement utilisés pour le dopage des polymères et copolymères intrinsèquement conducteurs sont le pentafluorure d'arsenic (AsF₅), le chlorure ferrique (Fe Cl₃), le tétrafluoroborate de nitrosyle (NOBF₄), l'hexafluorophosphate de nitrosyle (NOPF₆), le chlorure aurique (AuCl₃) et le tosylate ferrique (Fe(OTs)₃).

Ces composés oxydants, lorsqu'ils sont utilisés pour l'obtention de compositions polymériques électriquement conductrices ont pour inconvénient de comporter des atomes métalliques ce qui rend leur utilisation incompatible avec l'application des compositions polymériques conductrices en tant que résines photosensibles dans les procédés de photolitographie. En effet, la présence d'ions métalliques tels que bore, phosphore, fer, arsenic, antimoine et or, par exemple, risque de contaminer les différents constituants des circuits fabriqués à partir de résines photosensibles incluant des polymères conducteurs dopés avec ces composés oxydants et donc de perturber leurs propriétés électroniques.

De plus, la plupart des compositions polymériques conductrices dopées avec les composés oxydants ci-dessus présentent une faible résistance au vieillissement, c'est à dire que la conductivité des films conducteurs réalisés à partir de telles compositions polymériques conductrices décroît rapidement dans le temps. Ce phénomène est encore accentué sous l'effet de la température et de l'humidité.

L'article intitulé "Stability studies of the electrical conductivity of various poly (3-alkylthiophènes)" (Etude de la stabilité de divers poly(alkyl-3 thiophènes), Y. Wang, M.F. Rubner, Synthetic Metals 39 (1990), pages 153-175, étudie plus particulièrement la stabilité thermique de divers poly(alkyl-3 thiophènes) dopés à l'aide de Fe Cl₃, Fe(OTs)₃ et NOPF₆. Cet article mentionne que la meilleure stabilité thermique est obtenue en utilisant FeCl₃ comme composé oxydant pour le dopage des polymères. D'autre part, cet article mentionne que des essais pour introduire électrochimiquement l'anion tosylate en utilisant un composé purement organique, à savoir Bu₄ NOTs, se sont avérés infructueux.

L'article intitulé "Photoimaging of Electronically Conducting Polymeric Networks" (Réalisation de photoimages de réseaux de polymère électroniquement conducteur), M.S. A Abdou. G.A. Diaz-Guijada, M.J.Arroyo et S. Holdcroft, Chem. Mater 1991, 3, pages 1003-1006, décrit le dopage de poly(hexyl-3 thiophène) avec une solution de tétrafluoroborate de nitrosyle dans l'acétonitrile. Cet article mentionne encore que le polymère ainsi dopé perd notablement de sa conductivité après 30 minutes d'exposition à l'atmosphère.

L'article "Conducting polymers as Deep - UV electron-beam resist : Direct production of Micrometer Scale conducting Structures from poly(3-octylthiophène)" (Polymères conducteurs comme résist pour faisceau electronique et U.V. lointain : Production directe de structures conductrices à l'échelle micrométrique du poly(octyl-3-thiophène), S.X. Cai, J.F.W. Keana, J.C. Nabity, M.N. Wybourne, Journal of Molecular Electronics, Vol 7, 1991, pages 63-68 décrit la réticulation du poly(octyl-3-thiophène) dopé avec du FeCl3 à l'aide de bis (azido-4 tétrafluoro-2,3,5,6 benzoate) d'éthylène sous l'action d'un rayonnement UV lointain. Ce polymère est utile comme résist négatif dans l'UV lointain. Il peut être utilisé pour produire directement des structures conductrices à l'échelle micrométrique en utilisant la lithographie par faisceau électronique.

L'article intitulé "Laser, direct-write microlithography of soluble thiophènes" (Microlithographie de thiophènes solubles pour écriture directe au Laser), M.S.A. Abdou, Z.W. Xie, A.M. Leung et S. Holdcroft, Synthetic Metals, 52 (1992) pages 159-170 décrit la fabrication de "fils" polymériques par un procédé de photolithographie classique de semiconducteurs en utilisant pour la fabrication des "fils" un film de poly(hexyl-3 thiophène) qui est irradié à travers un masque par la lumière ultraviolette ou visible. Les zones non-irradiées du film sont éliminées par dissolution dans un solvant organique, le polymère restant est ensuite oxydé avec du tétrafluoroborate de nitrosyle ou du chlorure ferrique pour obtenir un motif électroniquement conducteur.

L'article inticulé "Microlithography using conducting polymers" (Microlithographie utilisant des polymères conducteurs), J.Bargon, T. Weidenbrück et T. Ueno, SPIE Vol 1262, (1990) pages 565-568 décrit des polymères électriquement conducteurs lithographiquement structurés comprenant des polythiophènes et des dérivés du polypyrrole dopés avec FeCl₃, Fe(Cl O₄)₃, Fe(NO₃)₃, NH₄ Ce(NO₃)₅, FeBR₃, et les peroxydes.

Enfin, l'article intitulé "Oxydation of π-conjugated polymers with gold trichloride: enhanced stability of the electronically conducting state and electroless deposition of Au⁰*" (Oxydation des polymères à conjugaison π avec le trichlorure aurique; stabilité améliorée de l'état électroniquement conducteur et dépôt non électrolytique de Au⁰*), M.S.A. Abdou et S.Holdcroft, Synthetic Metals, 60 (1993) pages 93-96, décrit le dopage oxydant du poly(hexyl-3 thiophène) au moyen d'une solution de AuCl₃ dans l'acétonitrile ou le nitrométane. Les polymères conducteurs obtenus présentent une stabilité supérieure, en particulier en comparaison de polymères dopés avec FeCl₃.

La demande de brevet CA-A-2 070 043 décrit également le dopage de polymères intrinsèquement conducteurs avec des sels métalliques et recommande l'utilisation de AuCl₃ comme dopant.

Les demandes de brevet WO 8 7 00 677 et EP-A-540 448 décrivent le dopage de polymères conducteurs avec FeCl₃ ou encore des composés contenant l'anion FeCl₄.

Comme indiqué ci-dessus, l'introduction d'atomes métalliques dans le polymère ou copolymère conducteur par les composés oxydants utilisés pour le dopage de ces polymères ou copolymères conducteurs, rend les polymères ou copolymères conducteurs obtenus incompatibles avec leur utilisation en tant que résines photosensibles en lithographie. D'autre part, excepté le polythiophène dopé avec AuCl₃, les polymères conducteurs obtenus présentent une faible stabilité, en particulier sous l'effet de la température et de l'humidité.

La présente invention a donc pour but d'obtenir des compositions polymériques conductrices ne contenant pas d'ions métalliques, et qui soient stables, en particulier lorsqu'elles sont soumises à l'action de la température et/ou de l'humidité.

L'invention a également pour but un procédé de fabrication de telles compositions polymériques conductrices.

L'invention a encore pour but de réaliser des substrats revêtus d'un film de ces compositions polymériques conductrices.

Enfin, l'invention a encore pour objet de fournir une solution oxydante pour le dopage de compositions polymériques conductrices comprenant comme composé oxydant fort un composé entièrement organique, c'est à dire ne contenant pas d'atome métallique.

Selon la présente invention, on fournit de nouvelles compositions polymériques conductrices, stables, comprenant au moins un polymère ou un copolymère intrinsèquement conducteur choisi parmi les poly(thiophènes), les polypyrroles, les polyacétylènes, les polyphénylènes, les copolymères des polythiophènes, les copolymères des polypyrroles et leurs dérivés hydrosolubles, dopé avec un composé oxydant choisi parmi les composés de formule :

(R¹SO₂)₂N-NO

où R¹ est choisi parmi les radicaux alkyles, linéaires ou ramifiés, ayant 1 à 10 atomes de carbone, de préférence 1 à 4 atomes de carbone, et les radicaux fluoroalkyles dans lesquels le groupe alkyle, linéaire ou ramifié, comprend de 1 à 10 atomes de carbone, de préférence 1 à 4 atomes de carbone.

Les polymères et copolymères intrinsèquement conducteurs utiles dans la présente invention, sont des composés connus et sont entre autre décrits dans les articles et demandes de brevets, mentionnés précédemment.

Parmi les poly(thiophènes) et leurs dérivés hydrosolubles particulièrement utiles dans la présente invention, on peut citer les poly(alkyl-3 thiophènes), les poly(arylalkyl-3 thiophènes), les poly(alcoxy-3 thiophènes) et les poly(alkylsulfonate-3 thiophènes) et les poly(alkylcarboxylate-3 thiophènes). On recommande tout particulièrement d'utiliser les poly(alkyl-3 thiophènes) et en particulier le poly(butyl-3 thiophène), le poly(hexyl-3 thiophène), le poly(octyl-3 thiophène) et le poly(octadécyl-3 thiophène). On recommande tout particulièrement l'utilisation du poly(octyl-3 thiophène).

Parmi les poly(alkylsulfonate -3 thiophènes) on recommande le poly(éthylsulfonate-3 thiophène) et le poly(butylsulfonate-3 thiophène).

Parmi les poly(alcoxy-3 thiophènes), on recommande le poly(méthoxy-3 thiophène) et le poly(éthoxy-3 thiophène).

Parmi les polypyrroles utiles dans la présente invention on peut citer les poly(alkyl-3 pyrroles), les poly(alkylsulfonate-3 pyrroles) et les poly(alcoxy-3 pyrroles). Parmi les poly(alkyl-3-pyrroles) on recommande le poly(méthyl-3 pyrrole), le poly(éthyl-3 pyrrole), le poly(octyl-3 pyrrole) et le poly(undécanoyl-3 pyrrole).

Parmi les poly(alkylsulfonate-3 pyrroles), on recommande le poly(éthylsulfonate-3 pyrrole) et le poly(butylsulfonate-3-pyrrole).

Parmi les poly(alcoxy-3 pyrroles), on recommande le poly(méthoxy-3 pyrrole) et le poly(éthoxy-3 pyrrole).

Parmi les dérivés hydrosolubles des polyacétylènes on recommande les polyacétylènes substitués par des ammonium quaternaires.

Le polymère intrinsèquement conducteur particulièrement recommandé dans la présente invention est le poly(octyl-3 thiophène).

Parmi les polyphénylènes on peut citer les poly(alkylphénylènes), les poly(carboxyphénylènes), les poly(alkylphénylènes-vinylènes) et les poly(alcoxyphénylènes).

Parmi les copolymères intrinsèquement conducteurs utiles dans la présente invention on peut citer les copolymères de poly(méthacrylate de méthyle) et de poly(thiophène) et les copolymères de poly(alkyl sulfonate pyrrole) et de polypyrrole.

Les compositons polymériques conductrices selon l'invention peuvent également comporter d'autres polymères et/ou des résines photosensibles.

Parmi les polymères qui peuvent être inclus dans les compositons polymériques conductrices selon l'invention, on peut citer les poly(acétates de vinyle), les poly(chlorures de vinyle), les polycarbonates, les poly(méthacrylates de méthyle), les polyimides, les alcools polyvinyliques, les polyacrylonitriles, les poly(butyrals de vinyle), les poly(chlorures de vinylidène), les polystyrènes, les poly(éthers de vinyle), les résines phénoliques et les polyuréthanes. Les polymères recommandés sont les poly(chlorures de vinyle) et les poly(acétates de vinyle).

Parmi les résines photosensibles pouvant être incorporées dans les compositions polymériques conductrices de la présente invention on recommande les résines novolaques comportant un composé photosensible, par exemple une molécule de type diazonaphtoquinone, les résines de poly(hydroxystyrène) et de poly(vinylphénol) photosensibilisées avec des sels d'onium ou de sulfonium, tels que les sels de diaryliodonium et de triarylsulfonium, comme cela est bien connu dans la technique.

La quantité de polymère ou de résine photosensible, autre que le polymère ou copolymère intrinsèquement conducteur, qui peut être incorporée aux compositions selon l'invention peut varier dans de larges mesures et est de préférence comprise entre 70 et 97 % en poids, par rapport au poids total de la composition.

Les composés oxydants permettant d'obtenir un dopage stable des polymères intrinsèquement conducteurs selon la présente invention sont des composés du type nitrosyle (NO)⁺ entièrement organiques, répondant à la formule générale :

(R¹SO₂)₂ N-NO

dans laquelle R¹ est défini comme ci-dessus.

On recommande tout particulièrement comme composé oxydant le bis(trifluorométhylsulfonyl)imidure de nitrosyle ((CF₃SO₂)₂N-NO).

Ces composés sont des composés connus et ils peuvent être préparés selon des méthodes classiques.

Weiss et al décrivent les sels de nitrosyle ainsi que leurs préparations dans Chem. Ber; (84) P 1973-6; Vol 117; n° 5.

Les bis(trifluorométhylsulfonyl)imidures de nitrosyle ou de nitryle ainsi que leurs préparations, sont décrits par Foropoulos et al dans Inorg.Chem. 1984, 23, 3720-3723.

Les compositions polymériques conductrices selon l'invention sont obtenues en mettant en contact une composition contenant au moins un polymère ou copolymère intrinsèquement conducteur ou un mélange d'au moins un polymère ou copolymère intrinsèquement conducteur avec un autre polymère et ou une résine photosensible avec une solution dans un solvant convenable d'un ou plusieurs composés de nitrosyle selon l'invention.

De préférence, la composition contenant le polymère ou le copolymère intrinsèquement conducteur est mise en contact par immersion dans la solution de composé oxydant sous forme d'un film déposé sur un substrat.

Les solvants convenant pour la préparation des solutions oxydantes de composé de nitrosyle selon l'invention sont les solvants liquides aprotiques polaires tels que, les esters, par exemple le carbonate de propylène ou d'éthylène et la butyrolactone, les nitriles, par exemple l'acétonitrile et le benzonitrile, les dérivés nitrés, par exemple le nitrométhane et le nitrobenzène, les sulfones, par exemple le sulfolane, et les amides, par exemple le diméthylformamide et la N-méthylpyrrolidone.

La concentration en composé de nitrosyle des solutions oxydantes selon la présente invention est généralement comprise entre 10⁻⁴ et 1 mole par litre.

Le temps de contact avec la solution oxydante est généralement compris entre 10 secondes et 1 heure, de préférence entre 30 secondes et 15 minutes, et dépend du dopage souhaité et de la concentration en composé oxydant de la solution oxydante.

De préférence, après la mise en contact avec la solution oxydante, la composition polymérique conductrice obtenue est rincée, généralement au moyen des mêmes solvants que ceux utilisés pour la solution oxydante. Ensuite, la composition polymérique conductrice, rincée, est généralement séchée soit à l'air à température ambiante, soit dans une étuve, soit sur une plaque chauffante, de préférence à une température comprise entre 60°C et 120°C pendant un temps de 3 à 5 minutes.

Dans un mode de réalisation préféré du procédé de l'invention, la composition polymérique comportant au moins un polymère ou copolymère intrinsèquement conducteur et éventuellement d'autres polymères et/ou une résine photosensible est déposée à partir d'une solution dans un solvant approprié sur la surface d'un substrat pour former un film polymérique ayant une épaisseur comprise entre 0,1 et 10 micromètres. Le dépôt d'un tel film sur la surface d'un substrat peut s'effectuer avantageusement par coulée en rotation (à la tournette) comme cela est bien connu.

Les plaques (substrats + film polymérique) obtenues sont alors immergées dans les solutions oxydantes selon l'invention pendant le temps nécessaire pour obtenir le dopage souhaité du film polymérique. Comme précédemment, les plaques sont alors rincées en utilisant généralement les mêmes solvants que pour la solution de composé oxydant. Ensuite, ces plaques subissent un séchage final, soit à l'air à température ambiante, soit en étuve, soit sur une plaque chauffante.

Les substrats recommandés sont le verre, le quartz, le silicium et la silice.

L'utilisation des solutions oxydantes selon l'invention pour la préparation de compositions polymériques conductrices sous forme de film sur un substrat présente comme avantage d'éviter tout risque de pollution du film conducteur par des atomes métalliques tels que B, P, S, Sb, Au et permet d'obtenir des films de composition polymérique conductrice dont les propriétés électriques sont stables mêmes lorsqu'ils sont soumis à des températures relativement élevées, ou à un environnement relativement agressif tel qu'une atmosphère humide.

### EXEMPLES 1 à 5.

On prépare une solution à 4% en poids de poly(octyl-3 thiophène) dans le toluène. La conductivité initiale du poly(octyl-3 thiophène) est de l'ordre de 10⁻⁸ S/cm. On dépose par coulée en rotation à partir de cette solution sur des substrats formés par des tranches de silicium recouvertent d'une couche de silice de 0,5 µm d'épaisseur des films de poly(octyl-3 thiophène) ayant une épaisseur comprise entre 0,2 et 0,3 µm. On sèche les substrats recouverts du film sur des plaques chauffantes pendant un temps total de 3 minutes à raison de 1 minutes à 60°C, 1 minute à 80°C et 1 minute à 100°C. Les substrats revêtus du film de polymère sont ensuite immergés dans différentes solutions oxydantes selon l'invention, puis séchés sur des plaques chauffantes. On mesure la conductivité des films de composition polymérique conductrice obtenus par la méthode des quatre pointes. La composition des solutions oxydantes utilisées, la durée de dopage ainsi que le résultat de la mesure de la conductivité sont donnés dans le tableau 1 ci-dessous.

**TABLEAU I**

| **Exemple n°** | *Solution oxydante* | | | *durée de l'inunersion (minutes)* | *Conductivité mesurée (S/cm)* |
|---|---|---|---|---|---|
| | *Composé oxydant* | *Solvant* | *Concentration (mole/litre)* | | |
| **1** ⁺ | CF₃SO₃-NO | nitrométhane | 10⁻² | 1 | 10 |
| **2** ⁺ | HSO₄-NO* | acétonitrile | saturée | 10 | 5 |
| **3** | (CF₃SO₂)₂N-NO | nitrométhane | 3.10⁻³ | 2 | 10⁻² |
| **4** | CF₃SO₂)₂N-NO | nitrométhane | 3.10⁻² | 1 | 10 |
| **5** | (CF₃SO₂)₂N-NO | nitrométhane | 5.10⁻³ | 1 | 20 |

| | | | | | |
|---|---|---|---|---|---|
| * produit commercialisé par la société Fluka | | | | | |
| ⁺ Exemples comparatifs | | | | | |

Les résultats obtenus montrent que les conductivités mesurées sont du même ordre de grandeur que celles que l'on obtenait avec les solutions d'oxydants métalliques classiques (FeCl₃ ou AuCl₃) pour des concentrations et des solvants équivalents.

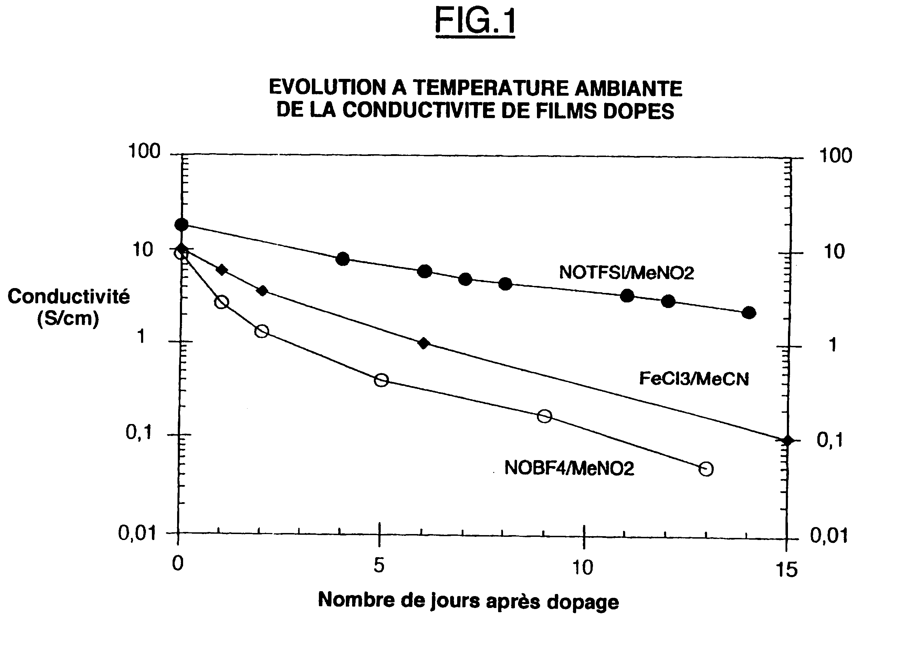

On a soumis le substrat revêtu de l'exemple 4 à un essai de stabilité à température ambiante. Les résultats de cet essai sont représentés à la figure 1 où la conductivité du film polymérique conducteur a été mesurée en fonction du temps. On a également, à des fins de comparaison, représenté sur la figure 1 la conductivité en fonction du temps, dans les mêmes conditions, d'un substrat analogue revêtu avec des films analogues de poly(octyl-3 thiophène) mais dopés avec une solution de FeCl₃ dans l'acétonitrile et une solution de tétrafluoroborate de nitrosyle dans le nitrométhane, respectivement.

La figure 1 montre clairement que dans cet essai le film polymérique dopé avec la solution oxydante selon l'invention a une meilleure stabilité dans le temps que des films polymériques semblables dopés avec des solutions de FeCl₃ et NOBF₄.

La figure 2 est un graphe de la conductivité en fonction du temps du film de l'exemple 4, lorsqu'il est soumis à un essai de vieillissement en étuve à 110°C.

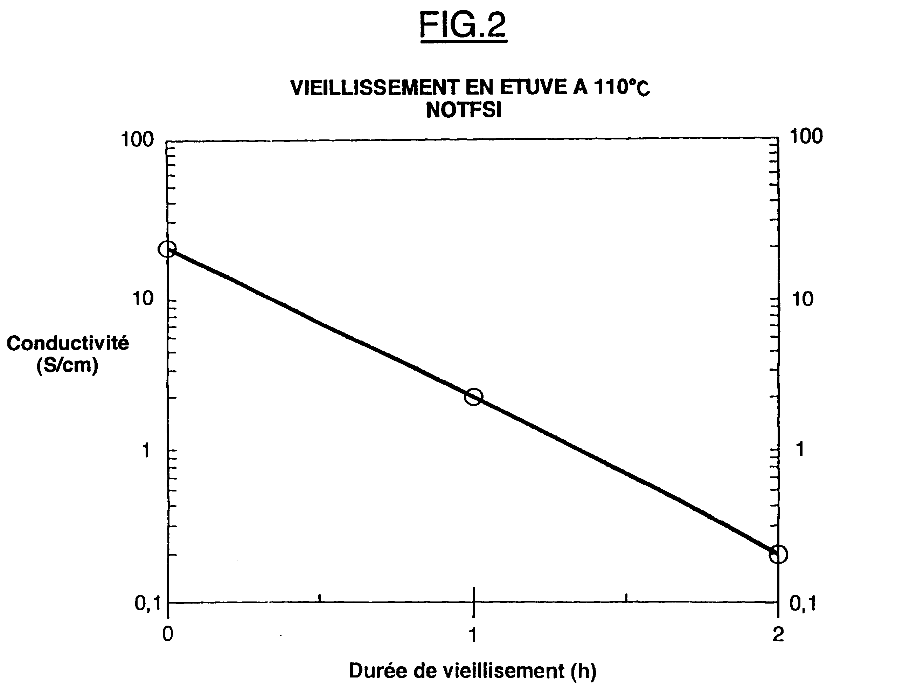

La figure 2 montre à l'évidence l'excellente tenue au vieillissement à chaud du film de composition polymérique selon l'invention.

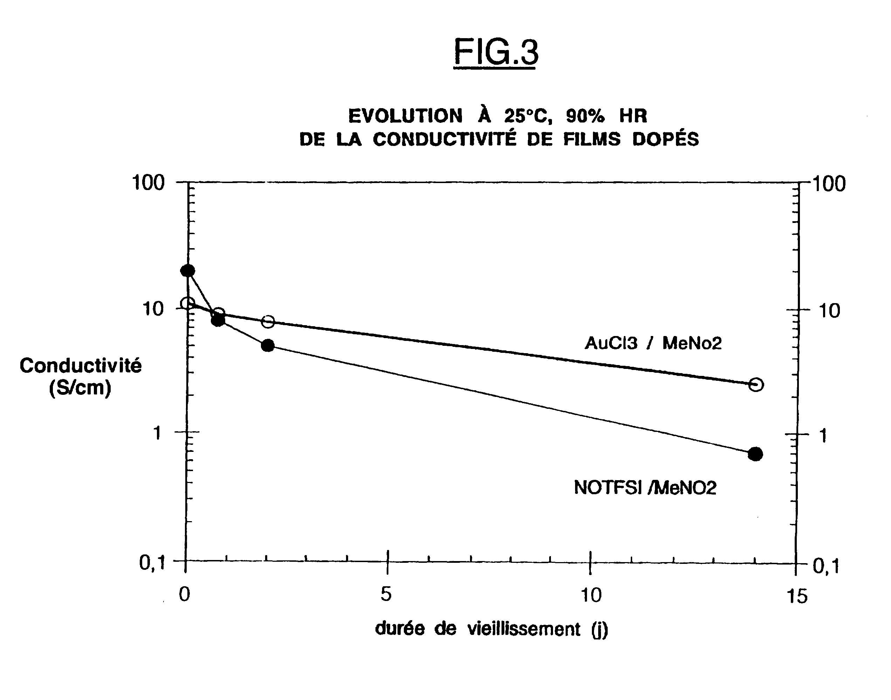

On a également soumis le substrat revêtu de l'exemple 5 selon la présente invention à un essai de vieillissement en atmosphère humide. L'essai a été effectué dans une étuve à 25°C à 90% d'humidité relative, et on a mesuré la conductivité du film polymérique en fonction du temps. Les résultats de cet essai sont représentés à la figure 3.

Sur cette figure on a également reporté les résultats d'un substrat revêtu d'un film polymérique analogue mais dopé dans des conditions analogues avec une solution de AuCl₃ dans le nitrométhane. La figure 3 montre que le substrat revêtu du film polymérique conducteur selon l'invention présente une stabilité comparable à celle d'un film polymérique conducteur dopé avec AuCl₃.

Sur les figures 1 à 3, NOTFSI représente le bis(trifluorométhylsulfonyl) imidure de nitrosyle.

La présente invention permet donc d'obtenir des films de compositions polymériques conductrices ayant des conductivités comparables à celles des films polymériques conducteurs connus, une stabilité à température ambiante et dans une atmosphère humide au moins comparable aux films dopés avec AuCl₃ et qui ont pour avantages de ne pas comporter d'atomes métalliques, ce qui les rend particulièrement utiles pour leur application en microélectronique.

## Revendications

1. Composition polymérique électroconductive exempte d'ions de métaux comprenant au moins un polymère ou copolymère intrinsèquement conducteur choisi parmi les polythiophènes, les polypyrroles, les polyacétylènes, les polyphénylènes, les copolymères des polyuthiophènes, les copolymères des polypyrroles et leurs dérivés hydrosolubles, caractérisée en ce que le polymère ou copolymère intrinsèquement conducteur est dopé avec un composé oxydant de formule :
(R¹SO₂)₂N-NO
où R¹ est choisi parmi les radicaux alkyles, linéaires ou ramifiés, ayant 1 à 10 atomes et les radicaux fluoroalkyles, linéaires ou ramifiés, ayant 1 à 10 atomes de carbone.

2. Composition selon la revendication 1, caractérisée en ce que R¹ est un radical alkyle ou fluoroalkyle ayant 1 à 4 atomes de carbone.

3. Composition selon la revendication 1, caractérisée en ce que R¹ est le radical CF₃-.

4. Composition selon l'une quelconque des revendications 1 à 3, caractérisée en ce qu'elle comprend en outre au moins un polymère ou une résine choisie parmi les poly(acétates de vinyle), les poly(chlorures de vinyle), les poly(méthacrylates de méthyle), les polycarbonates, les polyimides, les alcools polyvinyliques, les poly(acrylonitriles), les poly(butyrals de vinyle), les poly(chlorures de vinylidène), les polystyrènes, les poly(éthers de vinyle), les résines phénoliques, les polyuréthanes et les résines photosensibles.

5. Composition selon l'une quelconque des revendications 1 à 4, caractérisée par le fait que le polymère ou copolymère intrinsèquement conducteur est choisi parmi les poly(alkyl-3 thiophènes), les poly(alkylsulfonate-3 thiophènes), les poly(alkylcarboxylate-3 thiophènes), les poly(alcoxy-3 thiophènes), les poly(arylalkyl-3 thiophènes), les poly(alkyl-3 pyrroles), les poly(alkylsulfonate-3 pyrroles), les poly(alcoxy-3 pyrroles), les poly(alkyl phénylènes), les poly(carboxyphénylènes), les poly(alkyl phénylène-vinylènes), les poly(alcoxyphénylènes), les copolymères de poly(thiophène) et de poly(méthacrylate de méthyle) et les copolymères de poly(alkylsulfonate pyrrole) et de polypyrrole.

6. Composition selon la revendication 5, caractérisée en ce que le polymère intrinsèquement conducteur est un poly(alkyl-3-thiophène).

7. Composition selon la revendication 6, caractérisée en ce que le poly(alkyl-3 thiophène) est choisi parmi le poly(butyl-3 thiophène), le poly(hexyl-3 thiophène), le poly(octyl-3 thiophène) et le poly(octadécyl-3 thiophène).

8. Plaque comprenant un substrat revêtu d'un film de composition polymérique conductrice, caractérisée en ce que la composition polymérique conductrice est telle que définie dans l'une quelconque des revendications 1 à 7.

9. Plaque selon la revendication 8, caractérisée en ce que le film a une épaisseur comprise entre 0,1 et 10 micromètres.

10. Plaque selon la revendication 8 ou 9, caractérisée en ce que le substrat est choisi parmi le verre, le quartz, le silicium et la silice.

11. Procédé de fabrication d'une composition polymérique électriquement conductrice comprenant la mise en contact d'une composition comprenant au moins un polymère ou copolymère intrinsèquement conducteur choisi parmi les poly(thiophènes), les polypyrroles, les polyacétylènes, les polyphénylènes, les copolymères des polythiophènes, les copolymères des polypyrroles et leurs dérivés hydrosolubles, avec une solution dans un solvant approprié d'au moins un composé oxydant, caractérisé en ce que le composé oxydant est choisi parmi les composés de nitrosyle de formule (R¹SO₂)N-NO où R¹ est choisi parmi les radicaux alkyles, linéaires ou ramifiés, ayant 1 à 10 atomes de carbone, et les radicaux fluoroalkyles, linéaires ou ramifiés ayant 1 à 10 atomes de carbone.

12. Procédé selon la revendication 11, caractérisé en ce que R¹ est un radical alkyle ou fluoroalkyle ayant 1 à 4 atomes de carbone.

13. Procédé selon la revendication 11, caractérisé en ce que R¹ est CF₃-.

14. Procédé selon la revendication 11 ou 12, caractérisé en ce que le solvant est choisi parmi les esters, les nitriles, les dérivés nitrés, les sulfones et les amides.

15. Procédé selon l'une quelconque des revendications 11 à 14, caractérisé en ce que la concentration du composé oxydant dans la solution est comprise entre 10⁻⁴ et 1 mole par litre.

16. Procédé selon l'une quelconque des revendications 11 à 15, caractérisé en ce que le temps de contact de la composition polymérique comprenant au moins un polymère intrinsèquement conducteur avec la solution oxydante est compris entre 10 secondes et 1 heure, de préférence entre 30 secondes et 15 minutes.

17. Procédé selon l'une quelconque des revendications 11 à 16, caractérisé en ce que le contact de la composition polymérique comprenant au moins un polymère intrinsèquement conducteur avec la solution oxydante s'effectue par immersion d'une plaque comprenant un substrat revêtu d'un film de la composition polymérique dans la solution oxydante.

18. Procédé selon la revendication 17, caractérisé en ce que le film a une épaisseur de 0,1 à 10 micromètres.

19. Procédé selon l'une quelconque des revendications 11 à 18, caractérisé en ce que le substrat est choisi parmi le verre, le quartz, le silicium et la silice.

20. Procédé selon l'une quelconque des revendications 11 à 19, caractérisé en ce que la composition polymérique comprenant au moins un polymère ou copolymère intrinsèquement conducteur comprenant en outre au moins un polymère ou une résine choisi parmi les poly(acétates de vinyle), les poly(chlorures de vinyle), les poly(méthacrylates de méthyle), les polycarbonates, les polyimides, les alcools polyvinyliques, les poly(acrylonitriles), les poly(butyrals de vinyle), les poly(chlorures de vinylidène), les polystyrènes, les poly(éthers de vinyle), les résines phénoliques, les polyuréthanes et les résines photosensibles.

21. Solution oxydante caractérisée en ce qu'elle comprend au moins un composé oxydant choisi parmi les composés de nitrosyle de formule
(R¹SO₂)₂N-NO
où R¹ est choisi parmi les radicaux alkyles, linéaires ou ramifiés ayant 1 à 10 atomes de carbone et les radicaux fluoroalkyles, linéaires ou ramifiés ayant 1 à 10 atomes de carbone, en solution dans un solvant choisi parmi les esters, les nitriles, les dérivés nitrés, les sulfones et les amides.

22. Solution selon la revendication 21, caractérisée en ce que R¹ est le radical CF₃-.

23. Solution selon la revendication 22, caractérisée en ce que le solvant est le nitrométhane.

24. Solution selon l'une quelconque des revendications 22 à 23, caractérisée en ce que la concentration en composé oxydant dans la solution est comprise entre 10⁻⁴ et 1 mole par litre.

## Patentansprüche

1. Elektrisch leitende Polymerzusammensetzung frei von Metallionen, umfassend wenigstens ein intrinsisch leitfähiges Polymer oder Copolymer, ausgewählt aus Polythiophen, Polypyrrol, Polyacetylen, Polyphenylen, Copolymeren von Polythiophen, Copolymeren von Polypyrrol und deren wasserlöslichen Derivaten, dadurch gekennzeichnet, daß das intrinsisch leitfähige Polymer oder Copolymer dotiert ist mit einer oxidierenden Verbindung der Formel:
(R¹SO₂)₂N-NO
in der R¹ ausgewählt ist aus linearen oder verzweigten Alkylresten mit 1 bis 10 Kohlenstoffatomen und linearen oder verzweigten Fluoralkylresten mit 1 bis 10 Kohlenstoffatomen.

2. Zusammensetzung nach Anspruch 1, dadurch gekennzeichnet, daß R¹ ein Alkyl- oder Fluoralkylrest mit 1 bis 4 Kohlenstoffatomen ist.

3. Zusammensetzung nach Anspruch 1, dadurch gekennzeichnet, daß R¹ der Rest -CF₃ ist.

4. Zusammensetzunq nach eine der Ansprüche 1 bis 3, dadurch gekennzeichnet, daß sie ferner wenigstens ein Polymer oder Harz umfaßt, ausgewählt aus, Polyvinylacetat, Polyvinylchlorid, Polymethyl(meth)acrylat, Polycarbonat, Polyimid, Polyvinylalkohol, Polyacrylnitril, Polyvinylbutyral, Polyvinylidenchlorid, Polystyrol, Polyvinylether, Phenolharzen, Polyurethan und lichtempfindlichen Harzen.

5. Zusammensetzung nach einem der Ansprüche 1 bis 4, dadurch gekennzeichnet, daß das intrinsisch leitfähige Polymer oder Copolymer ausgewählt wird aus 3-Alkylpolythiophen, Polythiophen-3-alkylsulfonat, Polythiophen-3-alkylcarboxylat, 3-Alkoxypolythiophen, 3-Arylalkylpolythiophen, 3-Alkylpolypyrrol, Polypyrrol-3-alkylsulfonat, 3-Alkoxypolypyrrol), Polyalkylphenylen, Polycarboxyphenylen, Poly(alkylphenylenvinylen), Polyalkoxyphenylen, Copolymeren von Polythiophen und von Polymethyl(meth)acrylat und Copolymeren von Polypyrrolalkylsulfonat und von Polypyrrol.

6. Zusammensetzung nach Anspruch 5, dadurch gekennzeichnet, daß das intrinsisch leitfähige Polymer ein 3-Alkylpolythiophen) ist.

7. Zusammensetzung nach Anspruch 6, dadurch gekennzeichnet, daß das 3-Alkylpolythiophen ausgewählt ist aus 3-Butylpolythiophen, 3-Hexylpolythiophen, 3-Octylpolythiophen und 3-Octadecylpolythiophen.

8. Platte umfassend ein mit einem Film der elektrisch leitfähigen Polymerzusammensetzung beschichtetes Substrat, dadurch gekennzeichnet, daß die elektrisch leitfähige Polymerzusammensetzung gemäß einem der Ansprüche 1 bis 7 definiert ist.

9. Platte nach Anspruch 8, dadurch gekennzeichnet, daß der Film eine Dicke zwischen 0,1 und 10 um besitzt.

10. Platte nach Anspruch 8 oder 9, dadurch gekennzeichnet, daß das Substrat ausgewählt ist aus Glas, Quarz, Silizium und Siliziumdioxid.

11. Verfahren zur Herstellung einer elektrisch leitfähigen Polymerzusammensetzung umfassend das Kontaktieren einer Zusammensetzung, welche wenigstens ein intrinsisch leitfähiges Polymer oder Copolymer ausgewählt aus Polythiophen, Polypyrrol, Polyacetylen, Polyphenylen, Copolymeren von Polythiophen, Copolymeren von Polypyrrol und deren wasserlöslichen Derivaten umfaßt mit einer Lösung wenigstens eines Oxidationsmittels in einem geeigneten Lösungsmittel, dadurch gekennzeichnet, daß das Oxidationsmittel ausgewählt wird aus Nitrosylverbindungen der Formel (R¹SO₂)N-NO, in der R¹ ausgewählt ist aus linearen oder verzweigten Alkylresten mit 1 bis 10 Kohlenstoffatomen und linearen oder verzweigten Fluoralkylresten mit 1 bis 10 Kohlenstoffatomen.

12. Verfahren nach Anspruch 11, dadurch gekennzeichnet, daß R¹ ein Alkyl- oder Fluoralkylrest mit 1 bis 4 Kohlenstoffatomen ist.

13. Verfahren nach Anspruch 11, dadurch gekennzeichnet, daß R¹ -CF₃ ist.

14. Verfahren nach Anspruch 11 oder 12, dadurch gekennzeichnet, daß das Lösungsmittel ausgewählt ist aus Estern, Nitrilen, nitrierten Derivaten, Sulfonen und Amiden.

15. Verfahren nach einem der Ansprüche 11 bis 14, dadurch gekennzeichnet, daß die Konzentration des Oxidationsmittels in der Losung im Bereich von 10⁻⁴ bis 1 Mol. pro Liter liegt.

16. Verfahren nach einem der Ansprüche 11 bis 15, dadurch gekennzeichnet, daß die Kontaktierzeit der Polymerzusammensetzung, welche wenigstens ein intrinsisch leitfähiges Polymer umfaßt mit der oxidierenden Lösung im Bereich von 10 Sekunden bis einer Stunde, vorzugsweise zwischen 30 Sekunden und 15 Minuten liegt.

17. Verfahren nach einem der Ansprüche 11 bis 16, dadurch gekennzeichnet, daß die Polymerzusammensetzung, welche wenigstens ein intrinsisch leitfähiges Polymer umfaßt mit der oxidierenden Lösung kontaktiert wird, indem eine Platte, die ein mit einem Film der Polymerzusammensetzung beschichtetes Substrat umfaßt, in die oxidierenden Lösung eingetaucht wird.

18. Verfahren nach Anspruch 17, dadurch gekennzeichnet, daß der Film eine Dicke von 0,1 bis 10 um besitzt.

19. Verfahren nach einem der Ansprüche 11 bis 18, dadurch gekennzeichnet, daß das Substrat ausgewählt ist aus Glas, Quarz, Silizium und Siliziumdioxid.

20. Verfahren nach einem der Ansprüche 11 bis 19, dadurch gekennzeichnet, daß die Polymerzusammensetzung, die wenigstens ein intrinsisch leitfähiges Polymer oder Copolymer aufweist, ferner wenigstens ein Polymer oder Harz umfaßt, ausgewählt aus Polyvinylacetat, Polyvinylchlorid, Polymethyl (meth)acrylat, Polycarbonat, Polyimid, Polyvinylalkohol, Polyacrylnitril, Polyvinylbutyral, Polyvinylidenchlorid, Polystyrol, Polyvinylether, Phenolharzen, Polyurethan und lichtempfindlichen Harzen.

21. Oxidierende Lösung, dadurch gekennzeichnet, daß sie wenigstens ein Oxidationsmittel ausgewählt aus den Nitrosylverbindungen der Formel:
(R¹SO₂)₂N-NO
umfaßt, in der R¹ ausgewählt ist aus linearen oder verzweigten Alkylresten mit 1 bis 10 Kohlenstoffatomen und linearen oder verzweigten Fluoralkylresten mit 1 bis 10 Kohlenstoffatomen, gelöst in einem Lösungsmittel ausgewählt aus Estern, Nitrilen, nitrierten Derivaten, Sulfonen und Amiden.

22. Lösung nach Anspruch 21, dadurch gekennzeichnet, daß R¹ der Rest -CF₃ ist.

23. Lösung nach Anspruch 22, dadurch gekennzeichnet, daß das Lösungsmittel Nitromethan ist.

24. Lösung nach einem der Ansprüche 22 bis 23, dadurch gekennzeichnet, daß die Konzentration des Oxidationsmittels in der Lösung im Bereich von 10⁻⁴ bis 1 Mol pro Liter liegt.

## Claims

1. Electroconductive polymer composition free of metal ions and comprising at least one inherently conductive polymer or copolymer chosen from polythiophenes, polypyrroles, polyacetylenes, polyphenylenes, polyuthiophene [sic] copolymers, polypyrrole copolymers and water-soluble derivatives thereof, characterized in that the inherently conductive polymer or copolymer is doped with an oxidizing compound of formula:
(R¹SO₂)₂N-NO
where R¹ is chosen from linear or branched alkyl radicals having 1 to 10 atoms and linear or branched fluoroalkyl radicals having 1 to 10 carbon atoms.

2. Composition according to claim 1, characterized in that R¹ is an alkyl or fluoroalkyl radical having 1 to 4 carbon atoms.

3. Composition according to claim 1, characterized in that R¹ is the radical CF₃-.

4. Composition according to any one of claims 1 to 3, characterized in that it additionally comprises at least one polymer or resin chosen from poly(vinyl acetates), poly(vinyl chlorides), poly(methyl methacrylates), polycarbonates, polyimides, polyvinyl alcohols, poly(acrylonitriles), poly(vinyl butyrals), poly(vinylidene chlorides), polystyrenes, poly(vinyl ethers), phenolic resins, polyurethanes and photosensitive resins.

5. Composition according to any one of claims 1 to 4, characterized in that the inherently conductive polymer or copolymer is chosen from poly(3-alkylthiophenes), poly(thiophene-3-alkylsulphonates), poly(thiophene-3-alkylcarboxylates), poly(3-alkoxythiophenes), poly(3-arylalkylthiophenes), poly(3-alkylpyrroles), poly(pyrrole-3-alkylsulphonates), poly(3-alkoxypyrroles), poly(alkylphenylenes), poly(carboxyphenylenes), poly(alkylphenylene-vinylenes), poly(alkoxyphenylenes), poly(thiophene)-poly(methyl methacrylate) copolymers and poly(pyrrole-alkylsulphonate)polypyrrole copolymers.

6. Composition according to claim 5, characterized in that the inherently conductive polymer is a poly(3-alkylthiophene).

7. Composition according to claim 6, characterized in that the poly(3-alkylthiophene) is chosen from poly(3-butylthiophene), poly(3-hexylthiophene, poly(3-octylthiophene) and poly(3-octadecylthiophene).

8. Plate comprising a substrate coated with a film of conductive polymer composition, characterized in that the conductive polymer composition is as defined in any one of claims 1 to 7.

9. Plate according to claim 8, characterized in that the film has a thickness between 0.1 and 10 micrometres.

10. Plate according to claim 8 or 9, characterized in that the substrate is chosen from glass, quartz, silicon and silica.

11. Process for producing an electrically conductive polymer composition, which comprises bringing a composition comprising at least one inherently conductive polymer or copolymer, chosen from poly(thiophenes), polypyrroles, polyacetylenes, polyphenylenes, polythiophene copolymers, polypyrrole copolymers and water-soluble derivatives thereof, into contact with a solution, in an appropriate solvent, of at least one oxidizing compound, characterized in that the oxidizing compound is chosen from nitrosyl compounds of formula (R¹SO₂)N-N [sic] where R¹ is chosen from linear or branched alkyl radicals having 1 to 10 carbon atoms and linear or branched fluoroalkyl radicals having 1 to 10 carbon atoms.

12. Process according to claim 11, characterized in that R¹ is an alkyl or fluoroalkyl radical having 1 to 4 carbon atoms.

13. Process according to claim 11, characterized in that R¹ is CF3-.

14. Process according to claim 11 or 12, characterized in that the solvent is chosen from esters, nitriles, nitro derivatives, sulphones and amides.

15. Process according to any one of claims 11 to 14, characterized in that the concentration of the oxidizing compound in the solution is between 10⁻⁴ and 1 mol per litre.

16. Process according to any one of claims 11 to 15, characterized in that the contact time of the polymer composition comprising at least one inherently conductive polymer with the oxidizing solution is between 10 seconds and 1 hour, preferably between 30 seconds and 15 minutes.

17. Process according to any one of claims 11 to 16, characterized in that the contact of the polymer composition comprising at least one inherently conductive polymer with the oxidizing solution is carried out by immersing a plate comprising a substrate coated with a film of the polymer composition into the oxidizing solution.

18. Process according to claim 17, characterized in that the film has a thickness of 0.1 to 10 micrometres.

19. Process according to any one of claims 11 to 18, characterized in that the substrate is chosen from glass, quartz, silicon and silica.

20. Process according to any one of claims 11 to 19, characterized in that the polymer composition comprising at least one inherently conductive polymer or copolymer additionally comprises at least one polymer or resin chosen from poly(vinyl acetates), poly(vinyl chlorides), poly(methyl methacrylates), polycarbonates, polyimides, polyvinyl alcohols, poly(acrylonitriles), poly(vinyl butyrals), poly(vinylidene chlorides), polystyrenes, poly(vinyl ethers), phenolic resins, polyurethanes and photosensitive resins.

21. Oxidizing solution, characterized in that it comprises at least one oxidizing compound chosen from nitrosyl compounds of formula:
(R¹SO₂)₂N-NO
where R¹ is chosen from linear or branched alkyl radicals having 1 to 10 carbon atoms and linear or branched fluoroalkyl radicals having 1 to 10 carbon atoms, in solution in a solvent chosen from esters, nitriles, nitro derivatives, sulphones and amides.

22. Solution according to claim 21, characterized in that R¹ is the radical CF₃-.

23. Solution according to claim 22, characterized in that the solvent is nitromethane.

24. Solution according to either one of claims 22 to 23, characterized in that the concentration of oxidizing compound in the solution is between 10⁻⁴ and 1 mol per litre.
